# EUROPEAN PATENT APPLICATION

(11) **EP 0 676 630 A1**
(43) Date of publication of application: **11.10.1995**
(21) Application number: 95200904.1
(22) Date of filing: 10.04.1995
(51) Int. Cl.: G01N 1/28

(54) **An apparatus for subjecting samples to a treatment, a sample container for use in such an apparatus, and a system for treating and analyzing samples consisting substantially of liquid**

(30) Priority: 11.04.1994 NL 9400573
(71) Applicant: SCIENTIFIC GLASS TECHNOLOGY EXPLOITATIE B.V., NL-4338 PD Middelburg (NL)
(72) Inventor: van der Maas, Marinus Frans, NL-4341 LC Arnemuiden (NL); Wright, Brian, Escrick, York Y04 6JB (GB)
(74) Representative: Smulders, Theodorus A.H.J., Ir.

(57) **Abstract**

An apparatus for subjecting material samples to a treatment, comprising a housing (1) including at least one chamber (2) in which containers (8) for a sample to be treated can be disposed, a number of sample containers (8) in the at least one chamber (2) and means for bringing the temperature of a sample in a container (8) to a desired value and holding it at that value, wherein the sample containers (8) each consist of at least one thin conduit (17) wound into a spiral, which spiral is arranged in an otherwise closed vessel which comprises two passages (20,21) for the two ends of the conduit and an opening (26) for introducing a suitable liquid into the vessel around the spiral.

## Description

This invention relates to an apparatus for subjecting material samples to a treatment, comprising a housing including at least one chamber in which containers for a sample to be treated can be disposed, a number of sample containers in the at least one chamber and means for bringing the temperature of a sample in a container to a desired value and holding it at that value.

The invention further relates to a sample container for use in such an apparatus, as well as to a system for treating and analyzing samples consisting substantially of liquid, of which system such an apparatus is a part.

An apparatus as mentioned above is known. An example that can be mentioned is the apparatus marketed by Scientific Glass Technology B.V. under the name of Disso Wave, which apparatus is in essence a microwave oven in which samples in reagents in sample containers are heated to a suitable temperature in order to dissolve the samples in those reagents. In this procedure, the containers are usually processed manually, i.e. a sample, for instance a metal, is introduced into the container manually and subsequently a reagent, for instance an acid, is also supplied manually. Although this known apparatus already provides advantages over previous apparatuses in which samples were subjected to a boiling treatment in open containers, there is a need for a further improved apparatus in which, if desired, the treatment (the decomposition) of samples need not, or hardly so, take place by hand, in particular not if those samples themselves substantially consist of a liquid or may have been introduced into a liquid in finely divided form.

Now, one of the objects of the invention is to provide a thus improved apparatus. A further object of the invention is to provide a sample container for such an apparatus and to provide a system for sample processing and analysis in which the improved apparatus takes up a central position.

The first-mentioned object is achieved, in accordance with the invention, with an apparatus in which the sample containers each consist of at least one thin conduit wound into a spiral, which spiral is arranged in an otherwise closed vessel which comprises two passages for the two ends of the conduit and an opening for introducing a suitable liquid into the vessel around the spiral.

In an apparatus according to the invention with thus constructed sample containers, the samples to be treated with the decomposing reagents can, if desired, be continuously introduced into the apparatus and heated there in order to be decomposed. The liquid to be supplied around the spiral in the sample container can be oil. In particular in the case where the apparatus comprises microwave heating means, the use of oil is highly suitable because it can serve as a buffer to prevent the heating of the samples from "overshooting", i.e. being carried to above the desired temperature.

Suitably, in the apparatus according to the invention the vessel of each sample container with the spiral conduit arranged therein is arranged in a larger vessel, in such a manner that between the two vessels a space is present, which space is either held under vacuum or is filled with an inert gas. Such an embodiment is particularly suitable in the case of microwave heating because the outer vessel, partly because of the presence of the vacuum or the inert gas, will hardly be heated, if at all, which enables continued handling of the sample containers even if the temperature of the liquid (oil) in the inner vessel and the sample/reagent in the spiral conduit is very high.

In a preferred embodiment of the apparatus according to the invention, the apparatus comprises a supply connection which provides communication, via a thin conduit partly extending through the wall of the chamber, with an end of the spiral conduit of a first sample container, while the other end of the spiral conduit of the first sample container is connected via a thin conduit with an end of the spiral conduit of a next sample container and all sample containers are interconnected in similar manner, while the second end of the spiral conduit of the last sample container is connected, via a thin conduit partly extending through the chamber and the wall thereof, with a discharge connection. With an apparatus of such construction, a continuous input of a sample from outside the apparatus, transit through and simultaneous decomposition in a number of successive sample containers and output from the apparatus can be realized in a highly economic manner. Partly as a consequence of this, this embodiment of the apparatus according to the invention can be suitably included in a system according to the invention for processing and analyzing samples consisting substantially of liquid, comprising a device for automatically taking samples to be examined and mixing those samples with a reagent, which device is connected via a conduit with the supply connection of the above-mentioned embodiment of the apparatus according to the invention, which last apparatus, from the discharge connection, is connected via a conduit with an analytic device. In this connection, for instance six or twelve coupled sample containers can be disposed in the apparatus according to the invention. The system according to the invention can for instance be used for continuously taking, decomposing and analyzing samples of waste water in order to determine the degree of pollution thereof. The automatic sampling device to be included in the system can be of a known type. The same applies to the analytic device. This can for instance be an analytic device of the "segmented flow analyser" type or of the "flow injection analyzer" type.

When using the system according to the invention for automatically taking, decomposing and analyzing samples of waste water, the sample containers including the spiral conduit can consist of glass. The number of sample containers arranged in series can for instance be six. The length of the spiral conduit in each container can then be, for instance, 2-6 m, depending on the dimensions of the container, the diameter of the conduit, the pitch of the spiral winding and the like. At conventional speeds of travel, the samples will in such a case remain in the apparatus according to the invention for about thirty minutes. When using microwave energy as a heating mechanism, such a residence time is sufficient to properly decompose a sample. Heating may for instance take place at 150°C. The time gain over the known systems, where decomposition takes place, for instance, in a so-called "block digestor", which typically requires at least two hours, is enormous. With the system according to the invention, for instance 15-30 samples can be processed and analyzed per hour, as opposed to about 5 samples per hour with a known system.

Suitably, in the apparatus according to the invention the containers are arranged in the chamber on a substantially horizontal platform rotatable about a central shaft and the apparatus contains means for rotating that platform about that shaft in a desired direction, while the means for bringing the temperature of a sample in a container to a desired value are microwave energy providing means which are known per se. Thus it is possible to profit optimally from the possibilities of microwave heating.

The sample container according to the invention for use in the apparatus according to the invention is characterized by a substantially cylindrical outer vessel, a smaller annular cylindrical inner vessel which is arranged coaxially in the outer vessel in such a manner that space is present on all sides between the outer vessel and the inner vessel, a thin conduit wound as a spiral, which spiral is arranged in the annular space of the inner vessel coaxially with the outer vessel and the inner vessel, the conduit at the two ends thereof having been passed through the top wall of the inner vessel and having the respective ends terminating in two coupling means each constructed as a connecting element and spacer between the inner vessel and the outer vessel, while further a passage is provided through the wall of the outer vessel via the space between the outer vessel and the inner vessel to the annular space of the inner vessel, via which passage a suitable liquid can be introduced into the inner vessel around the spiral and if desired a temperature sensor can be arranged in that space.

In a suitable embodiment of the sample container according to the invention, the thin conduit is wound as a double spiral, which spirals of mutally different diameter are coaxially arranged one within the other. Further, with the sample container according to the invention, the coupling means preferably each comprise an opening directed inwardly from the outer wall of the outer vessel, which opening is provided with internal screw thread. In such an embodiment, connecting conduits can be coupled without leakage with a screw coupling utilizing an inverted cone connector which is placed on the bottom of the opening in question.

The foregoing mainly concerned a description of the application of a microwave oven as an apparatus according to the invention. A microwave oven is preferred. However, the use of other heating mechanisms is also possible.

It will further be clear that the apparatus and the system according to the invention may suitably be of computer-controlled design. Without further explanation a skilled person will be able to determine which data need to be gathered for that purpose at different points in and around the system and the apparatus, and how those data are to be processed to control sampling, conveyance, heating, analysis and the like.

The invention is explained with reference to the drawings, in which:
Fig. 1 is a representation in perspective of an embodiment of the apparatus according to the invention;
Fig. 2 is a representation in cross section through an embodiment of the sample container according to the invention; and
Fig. 3 is a diagrammatic top plan view of the sample container according to Fig. 2.

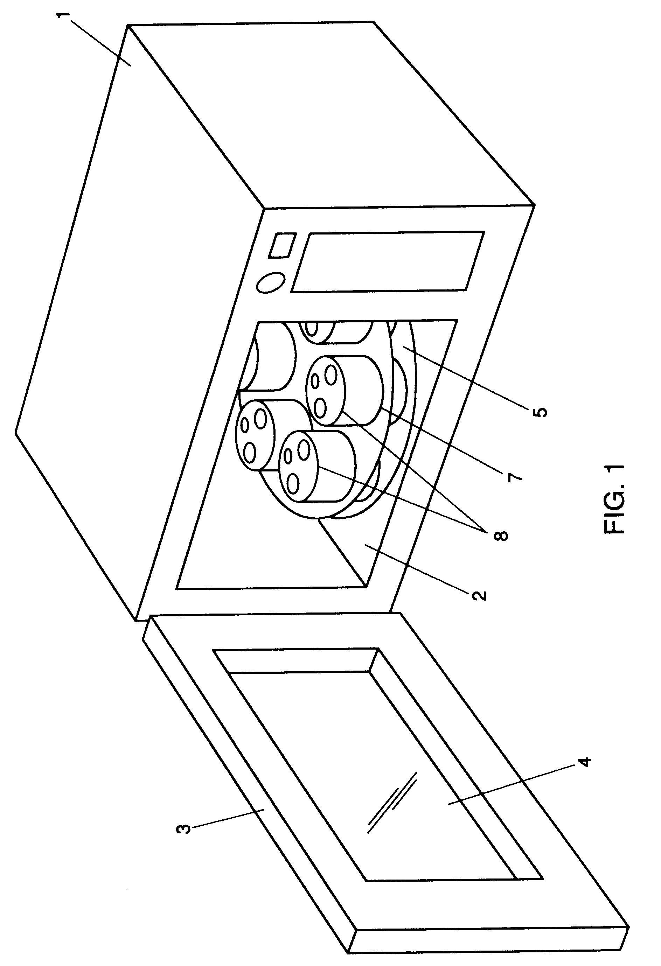

The embodiment of the apparatus according to the invention shown in Fig. 1 is essentially a microwave oven including a housing 1, in which housing a chamber 2 is located next to the microwave means (not shown). Located at the front of the housing 1 is the door 3 hinged to the housing 1, which is shown in the open position in the figure. Provided in the door 3 is a window 4, so that the chamber 2 can be permanently observed in the closed condition of the door 3.

Arranged in the chamber 2 is a rotary platform. The rotary platform comprises a bottom plate 5 and a disc-shaped plate 6, arranged at some distance above plate 5 and provided with openings 7 symmetrically spaced from the shaft and from each other, so that sample containers 8 fit therein and are supported by the bottom plate 5. The plates 5 and 6 of the rotary platform are mounted on a central shaft (not shown), which is coupled to a conventional driving mechanism to rotate the rotary platform around that shaft. The mechanism is so designed that in operation the platform alternately rotates to the left over, for instance, 120° and to the right over 120°. Thus all sample containers 8 placed on the plate 5 in the openings 7 of the plate 6 are exposed highly uniformly to the microwave energy in the oven, so that the samples in the containers are all heated in the same way. The number of openings 7 in the plate 6 is six in the embodiment shown, so that six sample containers can be treated simultaneously in them. The sample containers can be connected in series, as will be explained hereinafter.

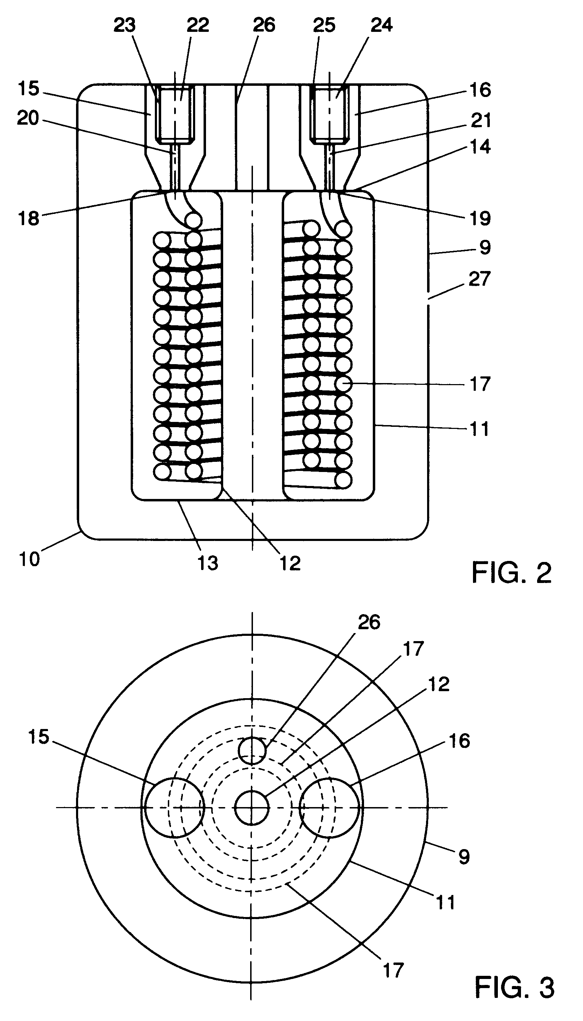

Figs. 2 and 3 show an embodiment of the sample container according to the invention in cross section and in top plan view. The sample container shown consists of a cylindrical, virtually entirely closed outer vessel 9 and a smaller cylindrical inner vessel 10 of annular cross section, arranged within the outer vessel 9. The inner vessel 10 consists substantially of an outer cylinder 11 and an inner cylinder 12. The cylinders 11 and 12 are connected at their short ends by annular closing plates 13 and 14. The inner vessel 10 is fixedly connected in the outer vessel 9 by means of two connecting pieces, also spacers, 15 and 16. The spacers 15 and 16 are located between and are connected with the closing plate 14 of the inner vessel 10 and the top wall of the outer vessel 9.

Arranged in the inner vessel 10 is a conduit 17 wound as a double spiral. The conduit 17 terminates at one end in an opening 18 and is sealingly connected to the closing plate 14. At the other end the conduit 17 terminates in an opening 19 in the closing plate 14 and is sealingly connected thereto. The arrangement is such that no connection exists between the interior of the conduit 17 and the annular interior of the inner vessel 10. As shown, the conduit 17 extends as a spiral from the opening 18 to the lower end of the vessel 10 and hence extends as a spiral of greater diameter than the first spiral to the top of the vessel 10 to the opening 19.

The opening 18, to which conduit 17 is connected, provides a communication with the passage 20 in the spacer 15, while the opening 19, to which connects conduit 17 at the other end thereof, provides a communication to the passage 21 in the spacer 16.

Provided in the spacer 15 is an opening 22 directed inwardly from the wall of the outer vessel 9, which opening 22 is provided with screw thread 23 on its circumferential wall. Similarly, the spacer 16 is provided with an opening 24 with internal screw thread 25. The openings 22 and 24 can thus accommodate screw couplings for connecting conduits to the passages 20 and 21, respectively, via which conduits material can be conveyed into and out of the spiral conduit 17.

Further, provided between the inner vessel 10 and the outer vessel 9 is a conduit 26 via which a suitable liquid, for instance oil, can be introduced into the space in the inner vessel 10 around the spiral conduit 17.

The material of the sample container, i.e. of the vessels 9 and 10, the conduit 17, the spacers 15 and 16 and the conduit 26 can be suitably chosen, for instance depending on the sample to be treated and reagent to be used. Glass, for instance quartz glass or borosilicate glass, will be satisfactory in certain cases. Plastic, such as teflon, will be suitable in other cases.

The space between the vessels 9 and 10 may have been brought under reduced pressure (vacuum) or filled with an inert gas, for instance nitrogen. It is also possible, however, to utilize ambient air as inert filling, in which case the outer vessel 9 need not be hermetically closed but may be provided with an opening 27 to admit air.

When using the embodiment of the sample containers according to the invention shown in the apparatus according to Fig. 1, series connection can be effected by connecting a conduit at one end by means of a screw coupling to the passage 20 in a sample container and in corresponding manner at the other end to the passage 21 of an adjacent sample container. Thus a sequence of sample containers can be connected in series. The first sample container of such a sequence can be connected via a conduit extending through the chamber 2 with an external connection. The same applies to the last sample container in the sequence. Via these external connections, the apparatus according to the invention can be connected on the one hand to automatic sampling equipment and on the other to analytic equipment in order to thereby constitute the system according to the invention for treating and analyzing samples.

## Claims

1. An apparatus for subjecting material samples to a treatment, comprising a housing including at least one chamber in which containers for a sample to be treated can be disposed, a number of sample containers in the at least one chamber and means for bringing the temperature of a sample in a container to a desired value and holding it at that value, characterized in that the sample containers each consist of at least one thin conduit wound into a spiral, which spiral is arranged in an otherwise closed vessel which comprises two passages for the two ends of the conduit and an opening for introducing a suitable liquid into the vessel around the spiral.

2. An apparatus according to claim 1, characterized in that the vessel of each sample container with the spiral conduit arranged therein is arranged in a larger vessel, in such a manner that between the two vessels a space is present, which space is either held under vacuum or is filled with an inert gas.

3. An apparatus according to claims 1-2, characterized in that the apparatus comprises a supply connection which, via a thin conduit partly extending through the wall of the chamber, provides a connection with an end of the spiral conduit of a first sample container, that the other end of the spiral conduit of the first sample container is connected via a thin conduit to an end of the spiral conduit of a next sample container, that all sample containers are interconnected in similar manner, while the second end of the spiral conduit of the last sample container is connected, via a thin conduit partly extending through the chamber and the wall thereof, to a discharge connection.

4. An apparatus according to claims 1-3, characterized in that the containers are arranged in the chamber on a substantially horizontal platform rotatable about a central shaft and the apparatus comprises means for rotating that platform about that shaft in a desired direction, while the means for bringing the temperature of a sample in a container to a desired value are microwave energy providing means which are known per se.

5. A sample container for use in the apparatus according to any one of claims 1-4, characterized by a substantially cylindrical outer vessel, a smaller annular cylindrical inner vessel, which is arranged coaxially in the outer vessel in such a manner that space is present on all sides between the outer vessel and the inner vessel, a thin conduit wound as a spiral, which spiral is arranged in the annular space of the inner vessel coaxially with the outer vessel and the inner vessel, the conduit at the two ends thereof having been passed through the top wall of the inner vessel and having the respective ends terminating in two coupling means each constructed as a connecting element and spacer between the inner vessel and the outer vessel, while further a passage is provided through the wall of the outer vessel via the space between the outer vessel and the inner vessel to the annular space of the inner vessel, via which passage a suitable liquid can be introduced into the inner vessel around the spiral and if desired a temperature sensor can be arranged in that space.

6. A sample container according to claim 5, characterized in that the thin conduit is wound as a double spiral, which spirals of mutually different diameter are arranged coaxially one within the other.

7. A sample container according to claims 5-6, characterized in that the coupling means are each provided with an opening directed inwardly from the outer wall of the outer vessel and provided with internal screw thread.

8. A system for treating and analyzing samples consisting substantially of liquid, comprising a device for automatically taking samples to be examined and mixing those samples with a reagent, which device is connected via a conduit with the supply connection of an apparatus according to claim 3, which last apparatus, from the discharge connection, is connected via a conduit to an analytic device.
